# EUROPEAN PATENT APPLICATION

(11) **EP 3 396 816 A1**
(43) Date of publication of application: **31.10.2018**
(21) Application number: 17168378.2
(22) Date of filing: 27.04.2017
(51) Int. Cl.: H02K 7/08, H02K 9/10, H02K 15/00, H02K 15/16, H02K 7/11, H02K 49/10, H02K 9/19

(54) **ROTARY ELECTRIC MACHINE, ROTARY ELECTRIC MACHINE DRIVING SYSTEM AND RAILWAY VEHICLE**

(71) Applicant: Hitachi, Ltd., Tokyo 100-8280 (JP)
(72) Inventor: Kunihiro, Naoki, Tokyo, 100-8280 (JP); Sugimoto, Shinji, Tokyo, 100-8280 (JP); Kori, Daisuke, Tokyo, 100-8280 (JP); Koike, Masatoshi, Tokyo, 100-8280 (JP); Endou, Mikio, Tokyo, 100-8280 (JP)
(74) Representative: Strehl Schübel-Hopf & Partner

(57) **Abstract**

Maintainability of a rotary electric machine including a cooling fan is maintained, mechanical loss and noise caused by rotation of the cooling fan are reduced, and efficiency of the rotary electric machine is further enhanced and noise reduction is achieved in the rotary electric machine at the same time. The rotary electric machine includes a stator, a rotor, a shaft as a rotating shaft of the rotor, a frame, a first bearing, a second bearing, a cooling fan, a third bearing, and a torque limiter. The first bearing and the second bearing rotatably support the shaft. The third bearing is disposed between the first bearing and the second bearing. The cooling fan is rotatably supported by the third bearing and has the same axis of rotation as that of the rotor. The torque limiter includes an inner ring fixed on the shaft and an outer ring fixed on the cooling fan. The inner ring and the outer ring are brought to an asynchronous rotation at a predetermined or larger number of revolutions.

## Description

### Technical Field

The present invention relates to a rotary electric machine, a rotary electric machine driving system and a railway vehicle.

### Background Art

Rotary electric machines, such as motors and generators, are used in many industrial fields and as a social trend, there is need for providing rotary electric machines meeting energy saving and resource saving requirements. With this being the situation, many improvement technologies have been proposed for enhancement of the efficiency of rotary electric machines and development of such technologies has been a major challenge.

In the field of rotary electric machines for railway vehicles, for example, conventional rotary electric machines called "open motors" have been progressively replaced with those called "totally enclosed motors". The totally enclosed motor is characterized by high efficiency, low maintenance, and low noise.

The open motor uses a cooling system to take outside air directly into the motor. Meanwhile, the totally enclosed motor uses a cooling system to cause inside air, circulated within a frame, to exchange heat with outside air, instead of taking outside air into the motor. Since outside air is not taken into the motor, the totally enclosed motor is free from fouling arising from iron powder or dust and obviates necessity for air blow cleaning and the like for the interior of the motor. This makes the motor excellent in maintainability.
Patent Document 1 discloses a rotary electric machine configured to reduce a ventilation noise from a cooling fan experienced in a conventional open motor. To implement this, a cooling fan is rotatably supported on a different member away from a rotor shaft and either of the cooling fan and the rotor shaft is equipped with a permanent magnet and the other is equipped with a hysteresis material or a permanent magnet opposed thereto.
Patent Document 2 discloses a configuration in which a cooling fan is connected to a shaft via a rotatable and axially movable bearing to reduce a rotational resistance from the cooling fan during no-load running of a rotary electric machine. In this configuration, the cooling fan is anchored to an end face of a rotor in a direction of its rotation axis by a leakage flux from the rotor.

### Prior Art Documents

### Patent Documents

Patent Document 1: Japanese Unexamined Utility Model Application Publication No. Hei 2(1990)-110966
Patent Document 2: Japanese Patent Application Laid-Open No. 2005-295739

### Summary of the Invention

### Problem to be Solved by the Invention

Conventional cooling fans designed to take in outside air involve some disadvantages, the conventional cooling fans being used in open motors. Iron powder and the like are prone to enter a third bearing and this increases frequency of maintenance. A bearing of the cooling fan must be removed when a bearing of a rotor is replaced or a bearing of the rotor is lubricated, the bearing of the rotor being more prone to wear than the bearing of the cooling fan.

A totally enclosed motor is inferior to the open motor in a cooling performance. To cope with this, in the totally enclosed motor, loss reduction (efficiency enhancement) is sought to suppress heat generation by applying low-loss materials to stator windings, rotor conductors, iron cores, and the like as well as improving structures thereof.

In the totally enclosed motor, a cooling fan is housed in a frame; therefore, fan noise can be reduced, the fan noise being a major noise source of rotary electric machines for railway vehicles.

Up to now, improvements have been pursued with attention focused on efficiency at a rated output point (medium speed region). Meanwhile, in a low speed region and a high speed region, the rotary electric machines are lower in efficiency than in a medium speed region and there is plenty of scope for improvement. When attention is focused on the high speed region, the mechanical loss accounts for the largest proportion among all the losses of the rotary electric machines. Typical means for reducing the mechanical loss in the high speed region include reducing a pressure difference produced in a cooling fan (difference between an inside diameter and an outside diameter of the fan) and reducing a ventilation resistance at various points in a rotary electric machine. However, these means pose a problem of lowering a cooling performance (air quantity).

According to the foregoing, there is need for a proposal for a technology in which the low-maintenance property of a totally enclosed motor is maintained and efficiency enhancement and noise reduction are further pushed forward.

Patent Document 1 relates to an open motor and is not assumed on the above problem.

The cooling fan in Patent Document 2 is anchored to an end face of a rotor in a direction of its rotation axis by a leakage flux from the rotor. When the rotor is rotated at a high speed, the cooling fan is rotated at the same speed; therefore, the problem of noise from the cooling fan is not solved.

It is an object of the prevent invention to maintain maintainability of a rotary electric machine including a cooling fan, reduce mechanical loss and noise caused by rotation of the cooling fan, further enhance an efficiency of the rotary electric machine, and reduce noise from the rotary electric machine at the same time.

### Means for Solving the Problem

A rotary electric machine of the present invention includes: a stator, a rotor, a shaft as a rotating shaft of the rotor, a frame, a first bearing, a second bearing, a cooling fan, a third bearing, and a torque limiter. The first bearing and the second bearing rotatably support the shaft, the third bearing is disposed between the first bearing and the second bearing, the cooling fan is rotatably supported by the third bearing and has the same rotation axis as that of the rotor, and the torque limiter has an inner ring fixed on the shaft and an outer ring fixed on the cooling fan, the inner ring and the out ring being asynchronously rotated at a predetermined or larger number of revolutions.

### Effect of the Invention

According to one aspect of the present invention, it is possible to maintain the maintainability of the rotary electric machine including the cooling fan, reduce the mechanical loss and the noise caused by the rotation of the cooling fan, further enhance the efficiency of the rotary electric machine, and reduce the noise from the rotary electric machine at the same time.

### Brief Description of the Drawings

FIG. 1 is a partial longitudinal sectional view of a rotary electric machine in a first embodiment;
FIG. 2 is a partial sectional view illustrating a pair of coupling magnets in the first embodiment;
FIG. 3 is a graph indicating an example of a torque waveform produced in a gap between the pair of coupling magnets;
FIG. 4 is a graph indicating an example of a shaft power arising from a cooling fan;
FIG. 5 is a graph indicating a result of an experiment on a fan of the present invention and a conventional fan;
FIG. 6A is a partial sectional view illustrating a modification to a coupling magnet;
FIG. 6B is a partial sectional view illustrating a modification to a coupling magnet;
FIG. 6C is a partial sectional view illustrating a modification to a coupling magnet;
FIG. 7 is a partial longitudinal sectional view illustrating a modification to a rotary electric machine in the first embodiment;
FIG. 8 is a partial longitudinal sectional view illustrating a rotary electric machine in a second embodiment;
FIG. 9 is a partial longitudinal sectional view illustrating a rotary electric machine in a third embodiment;
FIG. 10 is a partial longitudinal sectional view illustrating a rotary electric machine in a fourth embodiment;
FIG. 11A is a partial longitudinal sectional view of a rotary electric machine in a fifth embodiment;
FIG. 11B is an enlarged partial longitudinal sectional view illustrating a securing means for an inner-fan cooling fan 30 in FIG. 11A;
FIG. 11C is an enlarged partial cross-sectional view illustrating the shapes of the inner-fan cooling fan 30 and housing case 36 in FIG. 11B;
FIG. 11D is a partial cross-sectional view illustrating another example of the shapes of the inner-fan cooling fan 30 and housing case 36 in FIG. 11A;
FIG. 12 is a partial longitudinal sectional view illustrating a procedure for disassembling the rotary electric machine in FIG. 11A;
FIG. 13 is a partial longitudinal sectional view illustrating the procedure for disassembling the rotary electric machine in FIG. 11A;
FIG. 14 is a partial longitudinal sectional view illustrating the procedure for disassembling the rotary electric machine in FIG. 11A;
FIG. 15 is a partial cross-sectional view illustrating a rotary electric machine in a sixth embodiment;
FIG. 16 is a system configuration diagram illustrating the arrangement of a rotary electric machine in a seventh embodiment; and
FIG. 17 is a schematic block diagram illustrating a part of a railway vehicle including a rotary electric machine driving system in the seventh embodiment.

### Mode for Carrying Out the Invention

The present invention relates to rotary electric machines, rotary electric machine driving systems, and railway vehicles and in particular to a rotary electric machine having such a structure that maintainability related to maintenance of bearings can be maintained and mechanical loss and noise arising from rotation of a cooling fan in the rotary electric machine can be reduced.

The present invention is a technology to reduce mechanical loss and noise in a high speed region while maintaining the low-maintenance property of a totally enclosed motor.

Hereafter, a detailed description will be given to embodiments of the present invention with reference to the drawings. A plurality of embodiments are proposed with respect to the present invention; therefore, an identical reference numeral denotes an identical constituent element or a constituent element having a similar function. Below are only examples and the following description is not meant to limit embodiments of the present invention to the specific aspects below.

### First Embodiment

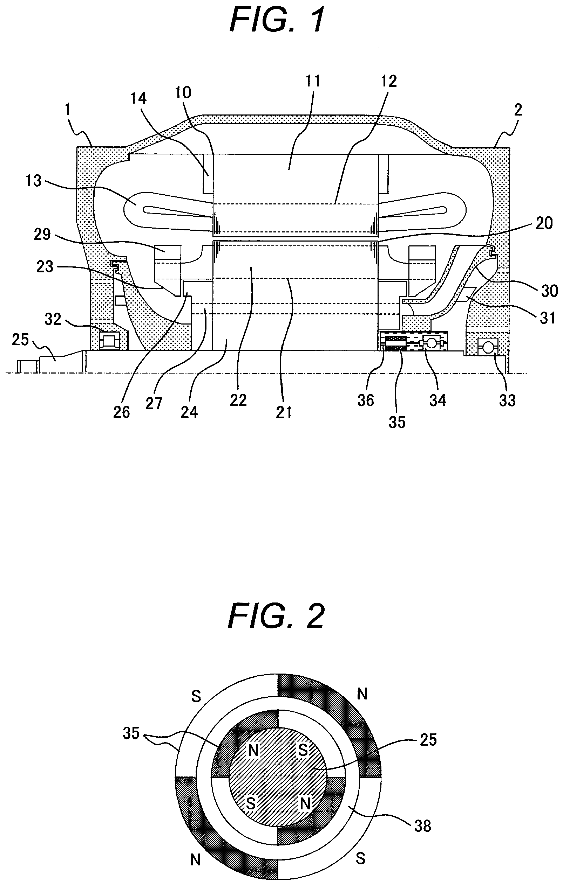

FIG. 1 shows a partial section of a rotary electric machine in this embodiment in a plane embracing a rotation axis.

Referring to FIG. 1, the rotary electric machine 1 includes a stator 10, a rotor 20, a shaft 25, and a frame 2.

The stator 10 is provided in its inner radius portion with stator slots 12 continuously formed in the axial direction and includes a stator core 11 formed by laminating a plurality of steel sheets, such as electromagnetic steel sheets, along the axial direction and a stator winding 13 wound in the stator slots 12. The stator core 11 is secured at both ends by a stator core retainer 14.

The rotor 20 is secured on the shaft 25 and is rotated together with the shaft 25. The stator 10 and the rotor 20 have an identical central axis. A gap is provided between the stator 10 and the rotor 20 and the stator 10 and the rotor 20 are disposed such that they are not brought into direct contact with each other.

The rotor 20 includes a rotor core 24 and a rotor bar 22. The rotor core 24 is provided in its outer radius portion with a plurality of rotor slots 21 continuously formed in the axial direction and has a plurality of steel sheets, such as electromagnetic steel sheets, laminated along the axial direction. A plurality of the rotor bars 22 are made up of a conductor of copper or the like inserted into the rotor slots 21 extended in the axial direction. Both ends of the rotor bars 22 are secured in end rings 23 by brazing. The end rings 23 are made up of an annular conductor of copper or the like and electrically connect the rotor bars 22 together. The end rings 23 are held by a retaining ring 29. The rotor core 24 is provided at both end faces with a rotor core retainer 26.

The shaft 25 is supported by a bearing at both ends of the frame 2 and is rotationally slid. Of the bearings at both ends of the frame 2, one on the direct-coupled side, connected with a load is defined as first bearing 32 and the other on the anti-direct-coupled side is defined as second bearing 33.

An inner-fan cooling fan 30 is placed in a space in the frame 2. The inner-fan cooling fan 30 has a function of circulating cooling air within the rotary electric machine 1. The rotor 20 is provided with a ventilating hole 27. The ventilating hole 27 allows air produced by the inner-fan cooling fan 30 to flow in the entire interior of the frame 2. The inner-fan cooling fan 30 further includes an auxiliary fan 31 for cooling a bearing.

In this embodiment, the inner-fan cooling fan 30 is annexed to the circumferential side of a housing case 36 housing a third bearing 34 and a pair of coupling magnets 35, provided between the first bearing 32 and the second bearing 33. The pair of coupling magnets 35 are made up of dual cylindrical magnets divided into an inner ring and an outer ring. The outer ring of the housing case 36 is supported in the third bearing 34 so as to prevent displacement of the center of the rotation axis during rotation.

FIG. 2 shows a section of the coupling magnets 35 in FIG. 1 as viewed from the axial direction. In this example, the coupling magnet is of a four-pole configuration but any number of poles is acceptable and the present invention is not limited to this example.

As shown in FIG. 2, the outer ring of the housing 36 connected with the inner-fan cooling fan 30 and the inner ring thereof connected with the shaft 25 are coupled together by magnetic force generated in the gap 38 between the dual cylinders of the coupling magnets 35.

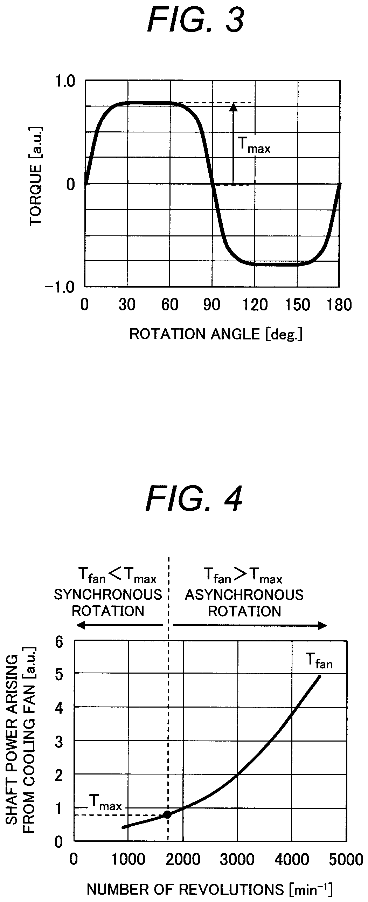

FIG. 3 is a graph indicating an example of a torque waveform produced in the gap 38 in the coupling magnets 35 in FIG. 2. The horizontal axis is taken as the number of revolutions of the coupling magnets 35 and the vertical axis is taken as torque.

When either ring of the four-pole coupling magnets 35 shown in FIG. 2 is relatively rotated, the torque is generated in the gap 38 between the inner ring and outer ring of the coupling magnets 35 by the attractive and repellent force of the magnets. When the north poles and the south poles are opposed to each other between the inner ring and outer ring of the coupling magnets 35, the torque generated in the gap 38 is zeroed; and when the mechanical angle is relatively varied, the torque having the largest magnitude Tₘₐₓ is generated by attractive and repellent force between the magnets.

FIG. 4 is a graph indicating an example of shaft power arising from a cooling fan. The horizontal axis is taken as the number of revolutions of the cooling fan and the vertical axis is taken as shaft power T_{fan} arising from the cooling fan.

The air quantity of the inner-fan cooling fan 30 is varied in accordance with rotational speed, shaft power indicated as T_{fan} is generated in a direction opposite the direction of rotation of the shaft 25. The frictional force of the bearings is sufficiently small for the shaft power of the fan and is negligible. That is, the following takes place when the shaft 25 is rotated: in a speed region where T_{fan}<Tₘₐₓ, the inner ring and the outer ring are synchronously rotated by the magnetic force of the coupling magnets 35; and in a speed region where T_{fan}>Tₘₐₓ, the outer ring of the coupling magnets 35 cannot follow the rotation of the inner ring connected to the shaft and is asynchronously rotated with delay.

In the example shown by Fig. 4, synchronous rotation takes place during a period in which the number of revolutions of the cooling fan is low and the shaft power arising from the cooling fan has not reached Tₘₐₓ yet. That is, when T_{fan}<Tₘₐₓ, the number of revolutions of the shaft 25 and the number of revolutions of the cooling fan are substantially equal to each other. Meanwhile, when the number of revolutions of the cooling fan is increased until T_{fan}>Tₘₐₓ, asynchronous rotation takes place.

This switching between synchronous rotation and asynchronous rotation does not require control by a field current or the like and can be passively caused by rotational speed.

As described up to this point, the inner-fan cooling fan 30 is separated from the shaft 25 and is asynchronously rotated with delay at a predetermined or higher rotational speed; therefore, the air quantity and noise of the inner-fan cooling fan 30 can be reduced in a high speed region of the shaft 25. Even when a predetermined rotational speed is exceeded and asynchronous rotation takes place in a high speed region, synchronous rotation can be resumed when the rotational speed is lowered to a low speed region again.

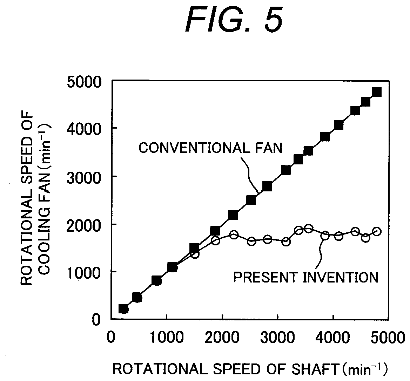

FIG. 5 is a graph indicating a result of an experiment on a fan of the present invention and a conventional fan. The horizontal axis is taken as the rotational speed of the shaft 25 and the vertical axis is taken as the rotational speed of the cooling fan 30.

Since the conventional cooling fan is connected to the shaft 25, the fan is brought into the same rotational speed as that of the shaft 25 when the rotational speed of the shaft 25 is increased. Meanwhile, the inner-fan cooling fan 30 of the present invention is asynchronously rotated and becomes substantially constant in speed at a certain or higher speed.

The material of the housing case 36 is selected from among iron, aluminum, stainless steel, resin, and the like as appropriate. To increase the magnetic force of the coupling magnets 35, a magnetic material can be used to reduce a leakage flux; and to give high priority to strength, stainless steel is used. These materials may be used together.

The material of the coupling magnets 35 is selected from among a ferrite magnet, a neodymium magnet, a samarium cobalt magnet, an alnico magnet, and the like and this selection is appropriately made according to service conditions including temperature and the like so as to obtain desired magnetic force and prevent demagnetization. The coupling magnets 35 need not be formed of a magnet and any apparatus is acceptable as long as it is capable of generating magnetic force.

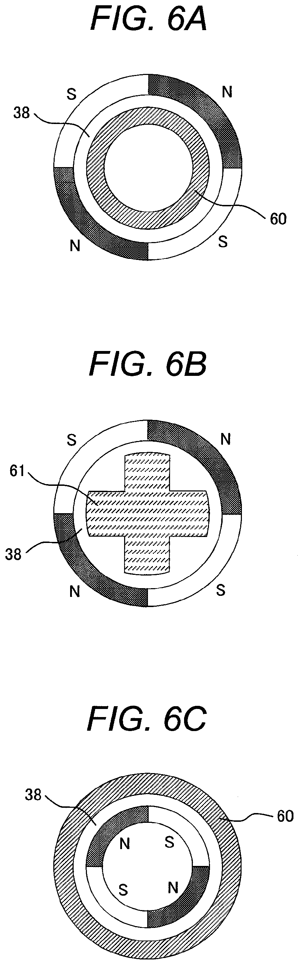

FIGS. 6A to 6C are partial sectional views illustrating modifications to a coupling magnet constituting a torque limiter.

In the configuration shown in FIG. 6A, one side (inner ring) of the coupling magnet is formed of an electric conductor 60 (conductive material) and a torque is generated by an induced current.

In the example shown in FIG. 6B, one side of the coupling magnet is formed of a gear of a magnetic substance 61 and is thereby provided with saliency. Reluctance torque is thereby generated.

In the configuration shown in FIG. 6C, the outer ring of the coupling magnet is formed of an electric conductor 60 and a torque is generated by an induced current.

Even when the materials of these inner rings and outer rings are interchanged, the same effect is obtained. These configurations are only examples and the present invention is not limited to these configurations. Any configuration obtains the working-effect of the present invention as long as the configuration allows magnetic force to be generated and coupled.

FIG. 1 illustrates an example in which one third bearing 34 is provided. Instead, more than one third bearing 34 may be provided with bearing load and balance taken into account.

In the experiment result indicated in FIG. 5, switching takes place between synchronous rotation and asynchronous rotation in proximity to approximately 1800 min⁻¹. As mentioned above, magnetic force can be adjusted by varying the material of the coupling magnets 35 or the shape, dimensions, or the like of the gap 38 and thus switching can be caused between synchronous rotation and asynchronous rotation at any rotational speed.

The coupling magnets 35 is a magnet-type torque limiter apparatus (hereafter, simply referred to as "torque limiter") in which an inner ring and an outer ring are separated from each other when a certain load is applied but need not be designed as to cause coupling by magnetic force. A mechanical torque limiter utilizing the pressing force of a spring or friction or resistance obtains the same effect.

Rotary electric machines for railway vehicles require periodical maintenance, such as oiling or replacement of a bearing, according to the travel distance and age of service of the railway vehicle. The frequency of maintenance on a bearing largely varies depending on the amount of sliding of the bearing or the load of an object supported by the bearing. A major load applied to the third bearing 34 is the weight of the inner-fan cooling fan 30 and the load supported by the third bearing 34 is lower than that supported by the first bearing 32 and the second bearing 33 supporting the rotor 20. Also with respect to the amount of sliding, the inner-fan cooling fan 30 and the shaft 25 are synchronously rotated until a predetermined speed is reached; therefore, the third bearing 34 is not slid in a low speed region. Meanwhile, the first bearing 32 and the second bearing 33 are always slid when the shaft 25 is rotated. That is, the third bearing 34 is lower than the first bearing 32 and the second bearing 33 both in bearing load and in frequency of use and is thus lower than the first bearing 32 and the second bearing 33 also in frequency of maintenance.

In this embodiment, the third bearing 34 is placed in an area between the first bearing 32 and the second bearing 33. That is, the configuration of this embodiment prevents the third bearing 34 from hindering the replacement work when the first bearing 32 or the second bearing 33 is replaced. If the third bearing 34 were placed at an end of the shaft 25 outside the shaft 25 in the axial direction, it would be required to remove the third bearing 34 when the second bearing 33 is replaced. This leads to an increased number of man-hours and poses a problem of reducing maintainability which is an advantage of totally enclosed motors.

In this embodiment, the third bearing 34 is placed within the frame 2. If the third bearing 34 is placed at an end of the shaft 25, it could be exposed to outside air and a problem leading to a failure would be posed by iron powder and dust being stuck to the coupling magnets 35. Since the coupling magnets 35 is placed inside the housing case 30 in the axial direction in this embodiment, sticking of iron powder and dust can be suppressed

In addition, when the coupling magnets 35 is placed between the center and the third bearing 34 in the axial direction as in this embodiment, it is possible to suppress sticking of very small quantities of iron powder and dust contained in cooling air circulated by the auxiliary fan 31 for cooling bearings and this makes the configuration of this embodiment more favorable.

The synchronous rotation and asynchronous rotation of the inner-fan cooling fan 30 are switched based on the magnitude correlation of force between T_{fan} and Tₘₐₓ in FIG. 4. For this reason, the amount of sliding of the third bearing 34 can also be suppressed by designing this correlation such that asynchronous rotation is caused at a higher rotational speed. In this case, necessity for replacement of the third bearing 34 could be obviated.

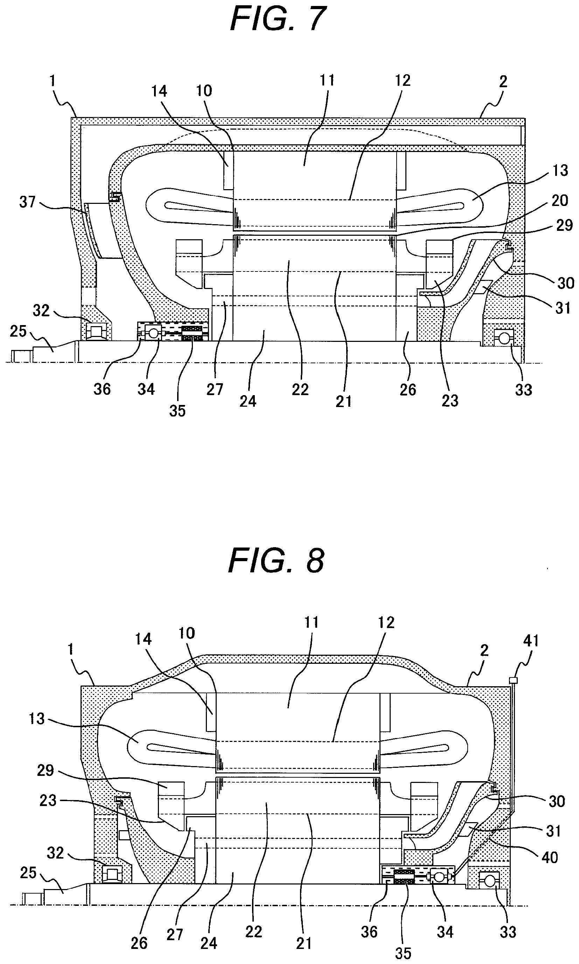

FIG. 7 illustrates a modification to this embodiment.

In the example shown in FIG. 7, the third bearing 34 and an outer-fan cooling fan 37 are placed in an area between the first bearing 32 and the second bearing 33. Even in a configuration involving an outer-fan cooling fan 37 like totally enclosed outer-fan motors, it is possible to maintain maintainability and reduce mechanical loss and noise in a high speed region to the extent that a cooling fan is placed as mentioned above.

Adoption of the above-mentioned configuration makes it possible to maintain the maintainability of the first bearing 32 and the second bearing 33, suppress fouling of the coupling magnets 35 due to iron powder and dust, and reduce mechanical loss and noise in a high speed region at the same time.

Hereafter, a description will be given to comparison with the prior art documents.

In the technology in Patent Document 1, a cooling fan is connected to an end of a shaft via a bearing and is thereby made rotatable and magnetic coupling force is generated using the attractive force of a magnet and an induced current generated in a squirrel-cage conductor. Magnet coupling is released during high-speed rotation of the shaft and the fan is rotated with delay. The mechanical loss and iron loss of the fan can be reduced during high-speed rotation. Meanwhile, the technology in Patent Document 1 is configured such that outside air sucked by the cooling fan is brought into direct contact with a permanent magnet. For this reason, iron powder and dust are stuck to the permanent magnet portion and this poses a problem leading to a failure. Further, to replace a bearing (the first bearing 32 and the second bearing 33 in the present invention) supporting a rotor shaft at both ends of a frame, it is necessary to remove a bearing (the third bearing 34 in the present invention) attached to an end of the shaft. While this reduces noise and mechanical loss, a problem of significantly degraded maintainability arises.

In the technology in Patent Document 2, a fixing frame for a cooling fan is attracted and secured to an end face of a rotor in its rotation axial direction by a leakage flux from the rotor. Also in the technology in Patent Document 2, the effect of mechanical loss reduction and noise reduction in a high speed region is obtained. However, coupling force is greatly influenced by the magnitude of a field current and a problem arises. When the magnitude of a field current is varied during variable-speed driving by an inverter or the like, an operating point at which a cooling fan is switched between a synchronous state and an asynchronous state is also shifted. As a result, the effect of mechanical loss reduction and noise reduction is not obtained at an intended point. A bearing supporting the cooling fan is placed at an end of the shaft and sticking of iron powder and dust cannot be suppressed from occurring. Even when a bearing supporting both ends of the shaft is replaced, a bearing supporting the cooling fan must be removed and maintainability is degraded.

In the description of this embodiment, a rotary electric machine for railway vehicles is taken as an example. This embodiment is also applicable to other rotary electric machines and the present invention is not limited to the concrete embodiment described herein.

As mentioned up to this point, according to this embodiment, it is possible to reduce mechanical loss and noise in a high speed region while maintaining the maintainability of a rotary electric machine.

### Second Embodiment

FIG. 8 is a sectional view illustrating a rotary electric machine in this embodiment.

This embodiment is different from the first embodiment in that the frame 2 is provided in the axial end face on the side where the third bearing 34 is placed with an oblique frame oil filler 40 (through hole) for inserting a feed pipe 41 for oiling a bearing as shown in FIG. 8.

The first bearing and the second bearing require periodical oiling according to the frequency of use. The degree of necessity for the maintenance of the third bearing varies depending on the design of an operating point at which synchronous rotation and asynchronous rotation are switched. When the third bearing also requires oiling, an advantage is brought about by the provision of the frame oil filler 40 as an oblique through hole in the axial end face of the frame on the side where the third bearing 34 is placed. The feed pipe 41 can be inserted and the third bearing 34 located inside the frame 2 can also be oiled without opening the frame 2. This frame oil filler 40 may be used only when the third bearing is oiled and may be closed on the other occasions. The oblique angle at which the frame oil filler 40 is provided is determined such that an oil filler for the third bearing 34 is located on an extension line from the frame oil filler 40.

According to the foregoing, the third bearing 34 can be oiled without disassembling the frame 2 of the rotary electric machine 1 and the service life of the third bearing 34 can be lengthened and friction therein can be reduced as compared with the first embodiment. For this reason, switching between synchronous rotation and asynchronous rotation can be performed with higher accuracy.

### Third Embodiment

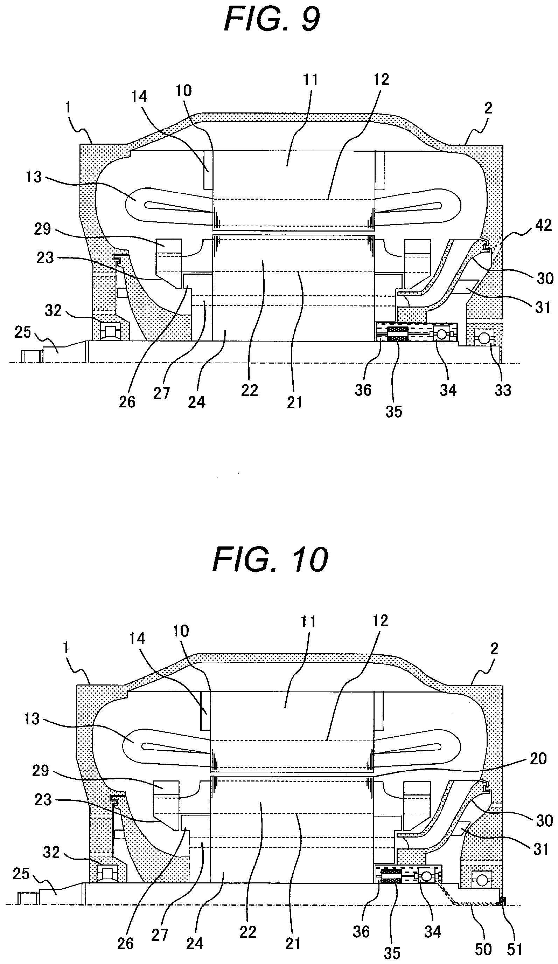

FIG. 9 is a sectional view illustrating a rotary electric machine in this embodiment.

This embodiment is different from the second embodiment in that the frame 2 is provided in the end face on the side where the third bearing 34 is placed with an oblique through hole 42 (auxiliary fan ventilating hole-frame oil filler) as shown in FIG. 9. This through hole 42 has both the functions of a bearing oil filler and the functions of an exhaust port for cooling air for the auxiliary fan 31.

The ventilating hole provided for cooling the second bearing is obliquely disposed so that the third bearing is positioned thereunder. Thus, the ventilating hole can be used also as an oil filler for the third bearing 34. For the feed pipe 41 for the third bearing 34, the same one as described in relation to the second embodiment is used. Necessity for a plug closing the frame oil filler 40 used in the second embodiment is obviated and this leads to a reduced number of parts.

As mentioned up to this point, the oil filler for the third bearing 34 is integrated with the ventilating hole for cooling a bearing. As a result, a number of man-hours in the manufacture of a rotary electric machine is reduced and a rotary electric machine of a lower cost than in the second embodiment can be provided.

### Fourth Embodiment

FIG. 10 is a sectional view illustrating a rotary electric machine in this embodiment.

This embodiment is different from the first to third embodiments in that the shaft 25 is provided in the end on the side where the third bearing 34 is placed with a shaft oil filler 50 penetrating the shaft 25 in the axial direction as shown in FIG. 10.

The shaft oil filler 50 is provided from the axial end face of the shaft 25 to the third bearing 34 positioned inside the frame 2. As a result, the bearing can be oiled without use of the feed pipe 41 used in the second or third embodiment. The shaft oil filler 50 can also be utilized as a grease spot (space) for storing bearing oil. During rotation of the shaft 25, bearing oil is caused to move from the center of the shaft 25 toward the outer radius side by centrifugal force; therefore, the third bearing 34 can be lubricated with the oil. The shaft oil filler 50 for the third bearing 34 is used only when the bearing is oiled and is closed with a sealing plug 51 on the other occasions.

According to the foregoing the third bearing 34 can be oiled without disassembling the rotary electric machine 1 and maintainability can be made higher than in the first embodiment.

### Fifth Embodiment

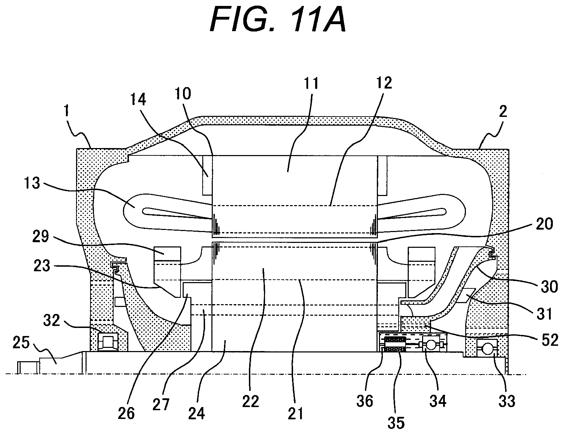

FIG. 11A is a sectional view illustrating a rotary electric machine in this embodiment.

This embodiment is different from the first to fourth embodiments in that: as shown in FIG. 11A, a connecting through hole 52 is provided in the inner radius portion of the inner-fan cooling fan 30 supporting the third bearing 34 so that a securing member, such as a bolt, can be passed through from the outside; and at least one similar through hole is provided also in the rotor core retainer 26 positioned on the opposite face of the through hole 52 in the axial direction.

If the rotary electric machine 1 is for railway vehicles, as mentioned above, bearings are replaced according to the age of service and travel distance. To facilitate this replacement work, some machines adopt a "non-disassembling bearing replacement structure" in which the first bearing 32 and the second bearing 33 can be replaced without pulling the rotor 20 off from the stator 10. If the rotor 20 is pulled off without a non-disassembling bearing replacement structure, a dedicated jig and the like are required. This involves an extensive work and poses a problem of maintainability being significantly degraded.

That is, even when the configuration of the present invention in which mechanical loss and noise can be reduced in a high speed region is applied, it is desirable that a non-disassembling bearing replacement structure can be maintained. When the third bearing 34 requires replacement, the connecting through hole 52 according to this embodiment can be used to conduct a replacement work without pulling the rotor 20 off from the stator 10.

Hereafter, a description will be given to a method for replacing a bearing in a non-disassembling manner according to this embodiment.

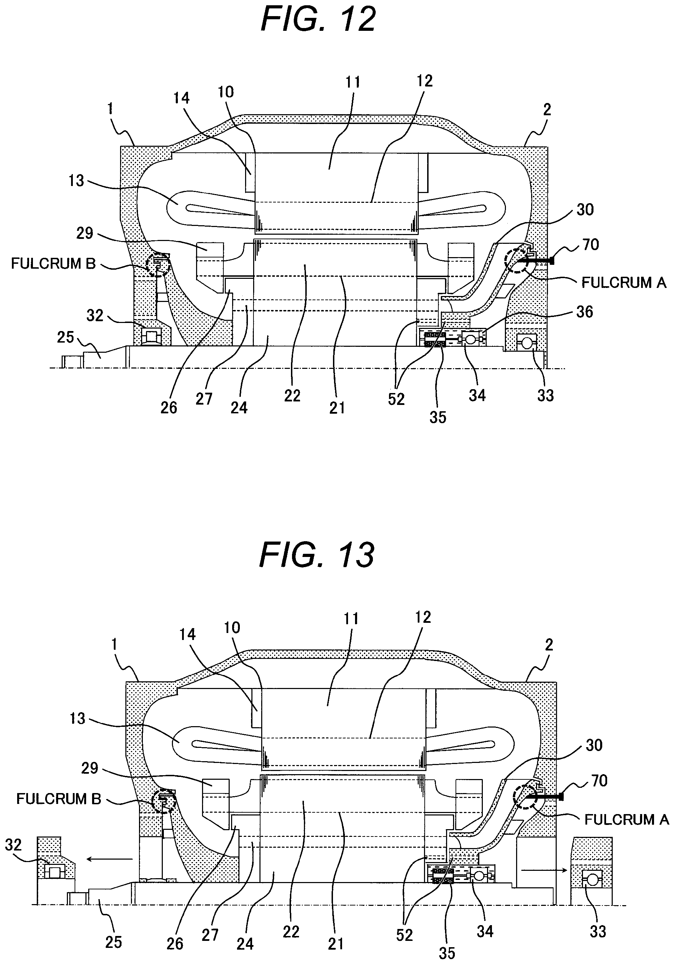

FIG. 12 to FIG. 14 are partial longitudinal sectional views illustrating a procedure for disassembling the rotary electric machine in FIG. 11A.

First, as shown in FIG. 12, a supporting member 70 (supporting member A), such as a through bolt, is passed through the frame 2 from the frame end face on the side where the third bearing 34 is placed and is pressed against a side face of the inner-fan cooling fan 30. When the rotor 20 is moved in the axial direction in this state, the fan frame 2 on the direct-coupled side and the fan are brought into contact with each other at fulcrum B. As a result, the rotor 20 can be supported through fulcrum A and fulcrum B.

In this state, the first bearing 32 and the second bearing 33 can be removed as shown in FIG. 13.

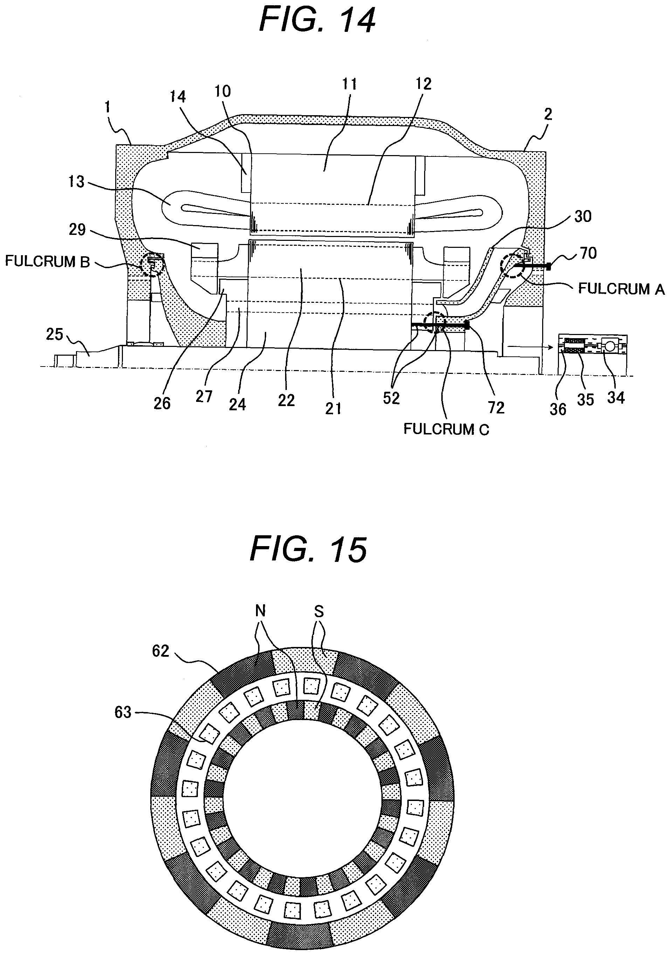

Subsequently, as shown in FIG. 14, a securing member 72 (supporting member B), such as a through bolt, is passed through the connecting through hole 52.

In the example in FIG. 14, the connecting through hole 52 is provided in the inner radius portion of the inner-fan cooling fan 30. The connecting through hole 52 may be provided in any other place as long as a constituent member rotatable coaxially with the shaft 25 can be connected and secured to the rotor 20. This is the same with the connecting through hole 52 on the rotor 20 side and the connecting through hole 52 need not be provided in the rotor core retainer 26 and may be configured so as to be secured on the rotor core 24 or the shaft 25.

According to the foregoing, the rotor is supported at three points, fulcrum A, fulcrum B, and fulcrum C. As a result, the first bearing 32 and the second bearing 33 can be replaced in a non-disassembling manner without pulling off the rotor 20 and the third bearing 34 can also be replaced in a non-disassembling manner.

Another usage of this embodiment is such that: the securing member 72 is passed through the connecting through hole 52 and the rotary electric machine 1 is driven with the rotor 20 and the inner-fan cooling fan 30 kept mechanically fastened to each other. Thus, the inner-fan cooling fan 30 is always rotated in synchronization with the shaft 25. Adoption of this method allows the fan to be selectively configured similarly to conventional fans. If a specified range is exceeded during use, it would be expected that a temperature rise or the like occurs in the rotary electric machine 1 beyond a design value and the coupling magnets 35 is demagnetized. In this case, the inner-fan cooling fan 30 can be temporarily driven as a conventional fan by fastening the rotor 20 and the inner-fan cooling fan 30 to each other at the connecting through hole 52.

In this embodiment, as described up to this point, the mechanical loss and noise of the fan can be reduced in a high speed region without degrading the low-maintenance property of the rotary electric machine.

Hereafter, a description will be given to modifications to a securing means for the inner-fan cooling fan 30.

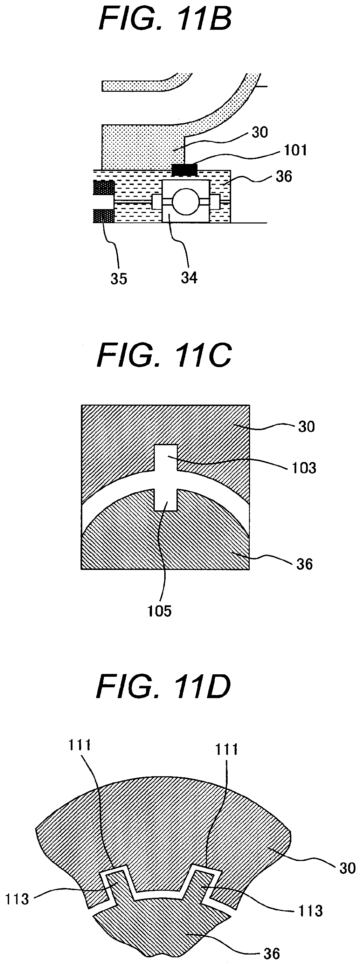

FIG. 11B is a partial enlarged sectional view illustrating a securing means for the inner-fan cooling fan 30 in FIG. 11A.

In the example in FIG. 11B, the inner-fan cooling fan 30 and the housing case 36 are each provided with a keyway (not shown) and a key 101 is inserted with these keyways opposed to each other. The positional relation between the inner-fan cooling fan 30 and the housing case 36 is thereby prevented from fluctuating.

FIG. 11C is a partial cross-sectional view illustrating the shapes of the inner-fan cooling fan 30 and housing case 36 in FIG. 11B in an enlarged manner.

In the example in FIG. 11C, the inner-fan cooling fan 30 is provided with a keyway 103 and the housing case 36 is provided with a keyway 105 and the inner-fan cooling fan and the housing case are disposed such that these keyways 103, 105 are opposed to each other. The inner-fan cooling fan and the housing case are secured and prevented from displacing in the circumferential direction by inserting a key (not shown) into the keyways 103, 105.

FIG. 11D is a partial enlarged sectional view illustrating a modification to a securing means for the inner-fan cooling fan 30.

In the example in FIG. 11D, the inner-fan cooling fan 30 is provided with a depression 111 and the housing case 36 is provided with a projection 113 and the depressions 111 and the projections 113 are fit together. A key, a wedge, or the like (not shown) is inserted into a gap between the depressions 111 and the projections 113 and the inner-fan cooling fan and the housing case are secured to each other without looseness.

### Sixth Embodiment

FIG. 15 is a partial cross-sectional view illustrating a rotary electric machine in this embodiment.

This embodiment is different from the first to fifth embodiments in that the coupling magnet is a magnetic gear 62 as shown in FIG. 15. That is, a pole piece 63 (modulator) is placed between the inner ring and outer ring constituting the coupling magnet. In addition, the number of poles of the inner ring is larger than the number of poles of the outer ring. As a result, the number of revolutions of the cooling fan 30 can be made larger than the number of revolutions of the shaft 25.

In a low speed region, the number of revolutions of the cooling fan 30 is low and it is difficult to obtain an air quantity. In addition, a current is larger than in a high speed region and it is difficult to cool the rotary electric machine. For this reason, cooling performance must be enhanced. If a conventional cooling fan is designed, the noise of the fan during high-speed rotation can pose constrains. Since the cooling fan must be housed in a limited space within the machine, the size of the cooling fan cannot be increased sometimes because of spatial constraints.

In the case of this embodiment, a coupling magnet is replaced with the magnetic gear 62 and the number of poles of the inner ring is made larger than that of the outer ring. A speed increasing effect is thereby obtained according to a gear ratio of the magnetic gear 62. As a result, it is possible to increase the speed and air quantity of the inner-fan cooling fan within a limited space.

If the magnetic gear 62 is applied to a conventional cooling fan, mechanical loss and noise would pose a problem in a high speed region because the speed is increased in proportion to the rotational speed of the shaft. To the contrary, in this embodiment, asynchronous rotation is caused at a predetermined or higher speed and a problem of mechanical loss or noise does not arise. Adoption of the configuration of this embodiment makes it possible to achieve both the enhancement of cooling performance in a low speed region and mechanical loss and noise reduction in a high speed region and thus obtain the synergistic effect thereof.

When cooling performance within the machine is enhanced, a temperature rise can also be suppressed in the stator winding 13, rotor bar 22, and end ring 23 shown in FIG. 1 and the like and the resistivity of a conductor due to temperature change can also be reduced. This brings about another effect of enhancement of the efficiency of a low speed region where copper loss is dominant.

It is assumed that a magnetic material or the like for reducing a leakage flux from the magnets is appropriately designed and disposed on the inner radius side of the inner ring and on the outer radius side of the outer ring in the magnetic gear 62.

Adoption of the configuration of this embodiment makes it possible to actively cool a low speed region and enhance the efficiency of the rotary electric machine in a low speed region as well as a high speed region. Further, it is also possible to reduce the size of the inner-fan cooling fan and the weight of the rotary electric machine.

### Seventh Embodiment

When the rotary electric machine is driven via a conversion equipment, such as an inverter or a converter, a current pattern for speed differs depending on a connected load. When a flowing current is large, the amount of heat generated at the stator winding 13, the rotor bar 22, and the end ring 23 is also increased and the temperature of the rotary electric machine 1 rises.

In the present invention, the fan is switched to asynchronous rotation in a high speed region and thus fan noise can be reduced. At the same time, an air quantity is reduced and the cooling performance is degraded in a high speed region. That is, an advantage is brought about by applying the present invention to a system used in such a manner that a current is reduced in a high speed region (an air quantity in a high speed region may be small). It is possible to sufficiently suppress a temperature rise in the rotary electric machine and yet reduce mechanical loss and noise in a high speed region.

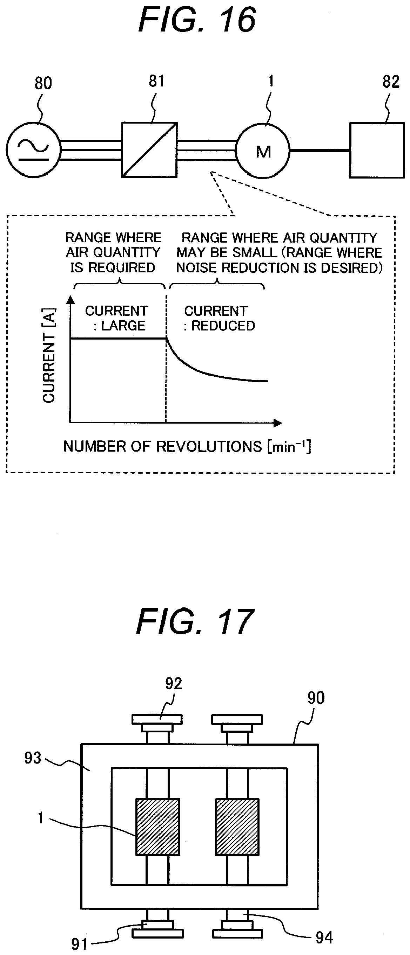

FIG. 16 is a system configuration diagram illustrating the arrangement of a rotary electric machine in this embodiment. FIG. 16 also indicates an example of a preferable current pattern for rotational speed in the form of graph.

In the example in FIG. 16, the rotary electric machine 1 is supplied with power from a power source 80 via a conversion equipment 81 and outputs the power to a load 82.

In the graph in FIG. 16, a large current is used in a low speed region and there is provided a range where the current is gradually reduced toward a high speed region. Even when the conversion equipment is supplied with power by a single-phase or direct-current power source, not a commercial three-phase alternating-current power source, the same effect as mentioned above is obtained.

As shown in FIG. 5, an air quantity is substantially constant during asynchronous rotation. Therefore, when a current in a high speed region is not larger than in a low speed region, no problem arises with respect to cooling.

According to the foregoing, an advantage is brought about by applying the present invention to a rotary electric machine driving system having a range where a current is smaller in a high speed region than in a low speed region. It is possible to sufficiently suppress a temperature rise in the rotary electric machine and yet reduce mechanical loss and noise in a high speed region.

### Eighth Embodiment

FIG. 17 is a schematic block diagram illustrating a part of a railway vehicle including a rotary electric machine driving system in the seventh embodiment.

In the example in FIG. 17, the railway vehicle 90 includes a bogie 93 equipped with a wheel 92, a speed increasing gear 91, and a rotary electric machine 1. The rotary electric machine 1 drives wheels 92 via speed increasing gears 91.

In the example in FIG. 17, the number of rotary electric machines 1 is two but one or three or more rotary electric machines are also acceptable.

Noise produced in the railway vehicle includes radiation sound produced from rails and wheels and electromagnetic noise from an inverter and fan noise from the rotary electric machine also accounts for a large percentage.

Application of a rotary electric machine of the present invention enables noise to be significantly reduced.

In addition, a power consumption reducing effect due to the effect of efficiency enhancement in a high speed region is also obtained by significantly reducing mechanical loss. In addition to obtaining these effects, maintainability for bearing replacement and oiling can be maintained and thus a problem of degraded maintainability does not arise.

This embodiment is also applicable to any other system as long as the system includes a rotary electric machine driving system that performs variable-speed operation. In particular, when this embodiment is applied to a system in which mechanical loss is dominant in a high speed region and fan noise is problematic, greater effects of efficiency enhancement and noise reduction are obtained.

### Explanation of Reference Numerals

- 1:: Rotary electric machine
- 2:: Frame
- 10:: Stator
- 11:: Stator core
- 12:: Stator slot
- 13:: Stator winding
- 14:: Stator core retainer
- 20:: Rotor
- 21:: Rotor slot
- 22:: Rotor bar
- 23:: End ring
- 24:: Rotor core
- 25:: Shaft
- 26:: Rotor core retainer
- 27:: Ventilating hole
- 30:: Inner-fan cooling fan
- 31:: Auxiliary fan
- 32:: First bearing
- 33:: Second bearing
- 34:: Third bearing
- 35:: Coupling magnet
- 36:: Housing case
- 37:: Outer-fan cooling fan
- 40:: Frame oil filler
- 41:: Feed pipe
- 42:: Through hole
- 50:: Shaft oil filler
- 51:: Sealing plug
- 52:: Connecting through hole
- 60:: Electric conductor
- 61:: Magnetic substance
- 62:: Magnetic gear
- 63:: Pole piece
- 70:: Supporting member
- 80:: Power source
- 81:: Conversion equipment
- 82:: Load
- 90:: Railway vehicle
- 91:: Speed increasing gear
- 92:: Wheel
- 93:: Bogie

## Claims

1. A rotary electric machine comprising:
a stator;
a rotor;
a shaft as a rotating shaft of the rotor;
a frame;
a first bearing;
a second bearing;
a cooling fan;
a third bearing; and
a torque limiter,
wherein the first bearing and the second bearing rotatably support the shaft,
the third bearing is disposed between the first bearing and the second bearing,
the cooling fan is rotatably supported by the third bearing and has the same axis of rotation as that of the rotor,
the torque limiter includes an inner ring fixed on the shaft and an outer ring fixed on the cooling fan, and
the inner ring and the outer ring are brought to an asynchronous rotation at a predetermined or larger number of revolutions.

2. The rotary electric machine according to Claim 1,
wherein the stator, the rotor, the cooling fan, the third bearing, and the torque limiter are housed in the frame.

3. The rotary electric machine according to Claim 1 or 2,
wherein the cooling fan circulates air inside the frame.

4. The rotary electric machine according to any one of Claims 1 to 3,
wherein the torque limiter is a magnetic coupling.

5. The rotary electric machine according to any one of Claims 1 to 4,
wherein the torque limiter is disposed between the rotor and the third bearing.

6. The rotary electric machine according to any one of Claims 1 to 5,
wherein the frame has a through hole; and
the through hole is used to oil the third bearing.

7. The rotary electric machine according to any one of Claims 1 to 5, further comprising:
an auxiliary fan,
wherein the frame has a through hole; and
the auxiliary fan introduces air outside the frame thereinto via the through hole.

8. The rotary electric machine according to Claim 7,
wherein the through hole is used to oil the third bearing.

9. The rotary electric machine according to any one of Claims 1 to 5,
wherein the shaft has a through hole; and
the through hole is used to oil the third bearing.

10. The rotary electric machine according to any one of Claims 1 to 9, further comprising:
an outer-fan cooling fan introducing an outside air into the frame to cool the frame.

11. The rotary electric machine according to any one of Claims 1 to 10,
wherein the third bearing is configured such that the third bearing can be fixed on the rotor.

12. The rotary electric machine according to any of Claims 1 to 11,
wherein the torque limiter includes a configuration of a magnetic gear.

13. A rotary electric machine driving system comprising:
a rotary electric machine; and
a conversion equipment,
wherein the rotary electric machine includes a stator, a rotor, a shaft as a rotating shaft of the rotor, a frame, a first bearing, a second bearing, a cooling fan, a third bearing, and a torque limiter,
the first bearing and the second bearing rotatably support the shaft,
the third bearing is disposed between the first bearing and the second bearing,
the cooling fan is rotatably supported by the third bearing and has the same axis of rotation as that of the rotor,
the torque limiter includes an inner ring fixed on the shaft and an outer ring fixed on the cooling fan,
the inner ring and the outer ring are brought to an asynchronous rotation at a predetermined or larger number of revolutions, and
the rotary electric machine is driven on power supplied from the conversion equipment.

14. The rotary electric machine driving system according to Claim 13,
wherein the conversion equipment is an inverter or a converter.

15. A railway vehicle comprising:
a wheel;
a speed increasing gear;
a rotary electric machine; and
a bogie,
wherein the rotary electric machine includes a stator, a rotor, a shaft as a rotating shaft of the rotor, a frame, a first bearing, a second bearing, a cooling fan, a third bearing, and a torque limiter,
the first bearing and the second bearing rotatably support the shaft,
the third bearing is disposed between the first bearing and the second bearing,
the cooling fan is rotatably supported by the third bearing and has the same axis of rotation as that of the rotor,
the torque limiter includes an inner ring fixed on the shaft and an outer ring fixed on the cooling fan,
the inner ring and the outer ring are brought to an asynchronous rotation at a predetermined or larger number of revolutions, and
the rotary electric machine drives the wheels via the speed increasing gear.

## Amended claims

### Amended claims in accordance with Rule 137(2) EPC.

1. A rotary electric machine (1) comprising:
a stator (10);
a rotor (20);
a shaft (25) as a rotating shaft of the rotor (20);
a frame (2);
a first bearing (32);
a second bearing (33);
a cooling fan (30);
a third bearing (34); and
a torque limiter (35),
wherein the first bearing (32) and the second bearing (33) rotatably support the shaft (25),
the third bearing (34) is disposed between the first bearing (32) and the second bearing (33),
the cooling fan (30) is rotatably supported by the third bearing (34) and has the same axis of rotation as that of the rotor (20),
the torque limiter (35) includes an inner ring fixed on the shaft (25) and an outer ring fixed on the cooling fan (30), and
the inner ring and the outer ring are brought to an asynchronous rotation at a predetermined or larger number of revolutions, and wherein the cooling fan (30) has a through hole (52) axially,
**characterized in that**
the cooling fan (30) can be fixed on the rotor (20) with a securing member (72) inserted into the through hole (52).

2. The rotary electric machine (1) according to Claim 1,
wherein the stator (10), the rotor (20), the cooling fan (30), the third bearing (34), and the torque limiter (35) are housed in the frame (2).

3. The rotary electric machine (1) according to Claim 1 or 2,
wherein the cooling fan (30) circulates air inside the frame (2).

4. The rotary electric machine (1) according to any one of Claims 1 to 3,
wherein the torque limiter (35) is a magnetic coupling.

5. The rotary electric machine (1) according to any one of Claims 1 to 4,
wherein the torque limiter (35) is disposed between the rotor (20) and the third bearing (34).

6. The rotary electric machine (1) according to any one of Claims 1 to 5,
wherein the frame (2) has a through hole (42); and the through hole (42) is used to oil the third bearing (34).

7. The rotary electric machine according to any one of Claims 1 to 5, further comprising:
an auxiliary fan (31),
wherein the frame (2) has a through hole (42); and
the auxiliary fan (31) introduces air outside the frame (2) thereinto via the through hole (42).

8. The rotary electric machine according to Claim 7,
wherein the through hole (42) is used to oil the third bearing (34).

9. The rotary electric machine (1) according to any one of Claims 1 to 5,
wherein the shaft (25) has a through hole; and
the through hole is used to oil the third bearing (34).

10. The rotary electric machine (1) according to any one of Claims 1 to 9, further comprising:
an outer-fan cooling fan (37) introducing an outside air into the frame (2) to cool the frame (2).

11. The rotary electric machine (1) according to any of Claims 1 to 10,
wherein the torque limiter (35) includes a configuration of a magnetic gear.

12. The rotary electric machine (1) according to any of Claims 1 to 11,
wherein a through hole (52) is arranged ad a side of the third bearing (34) of the frame (2),
the rotary electric machine being configured such that the cooling fan (30) can be fixed by pressing a supporting member (70) against a side face of the cooling fan (30), the supporting member (70) being inserted through the frame (2), and a fan (30) arranged on a direct-coupled side and the frame (2) can be fixed by being brought into contact with each other.

13. A rotary electric machine driving system comprising:
a rotary electric machine (1) according to one of claims 1 to 11; and
a conversion equipment (81),
wherein the rotary electric machine (1) is driven on power supplied from the conversion equipment (81).

14. The rotary electric machine (1) driving system according to Claim 13,
wherein the conversion equipment (81) is an inverter or a converter.

15. A railway vehicle comprising:
a wheel (92);
a speed increasing gear (91);
a rotary electric machine (1) (1) according to one of claims 1 to 10; and
a bogie (93),
wherein the rotary electric machine (1) drives the wheel (92) via the speed increasing gear (91).
